# EUROPÄISCHE PATENTSCHRIFT

(11) **EP 2 926 101 B1**
(45) Veröffentlichungstag und Bekanntmachung des Hinweises auf die Patenterteilung: **31.01.2018**
(21) Anmeldenummer: 13811761.9
(22) Anmeldetag: 02.12.2013
(51) Int. Cl.: G01K 5/62, G01K 5/70, G01K 3/04

(54) **TEMPERATURÜBERWACHUNGSEINHEIT**
TEMPERATURE MONITORING UNIT
UNITÉ DE SURVEILLANCE DE LA TEMPÉRATURE

(30) Priorität: 30.11.2012 AT 505512012
(43) Veröffentlichungstag der Anmeldung: 07.10.2015
(73) Patentinhaber: Seibersdorf Labor GmbH, 2444 Seibersdorf (AT); AIT Austrian Institute of Technology GmbH, 1220 Wien (AT)
(72) Erfinder: SCHMID, Gernot, A-2833 Bromberg (AT); BAMMER, Manfred, A-1220 Wien (AT)
(74) Vertreter: Wildhack & Jellinek
(86) Internationale Anmeldenummer: PCT/AT2013/050231
(87) Internationale Veröffentlichungsnummer: WO 2014/082112

(56) Entgegenhaltungen:
- SU-A1- 1 696 901
- US-A1- 2003 188 677

## Beschreibung

Die Erfindung betrifft eine Temperaturüberwachungseinheit, gemäß dem Oberbegriff des Patentanspruchs 1.

Erfindungsgemäße Temperaturüberwachungseinheiten werden insbesondere zur Überwachung von biologischem Material eingesetzt.

Biologische Materialien werden in Vials, Ampullen oder Karpullen, das sind kleine Glas- und Kunststoffbehälter, in flüssigem Stickstoff zum Beispiel bei -196°C gelagert. Mehrere Vials sind dabei üblicherweise in einer Halterung untergebracht, die als Ganzes in flüssigem Stickstoff aufbewahrt wird. Bei unsachgemäßer, zu langsamer, Entnahme von einzelnen Vials kann es vorkommen, dass die gesamte Halterung, inklusive aller in ihr untergebrachten Vials, zu lange aus dem flüssigen Stickstoff herausgenommen wird, sodass zwischenzeitlich eine Erwärmung der Vials erfolgt und das biologische Material dadurch beschädigt wird.

Da in der Praxis unsachgemäße Handhabung niemals ausgeschlossen werden kann, bedeutet dies, dass eine gewisse Unsicherheit dahingehend besteht, ob für ein benötigtes, aus dem flüssigen Stickstoff entnommenes Vial, die Kühlkette vom erstmaligen Einfrieren bis zur Verwendung, also der endgültigen Entnahme, tatsächlich lückenlos geschlossen war. Eine Unterbrechung der Kühlkette würde beispielsweise dann vorliegen, wenn die Vials auf eine das biologische Material gefährdende Temperatur von z.B. -100°C erwärmt werden, ohne das biologische Material zu entnehmen und für den vorgesehen Zweck unmittelbar zu verwenden. Nur wenn sichergestellt ist, dass die Temperatur der Vials durchgehend unterhalb einer zu spezifizierenden Schwelltemperatur lag, kann von einem biologisch einwandfreien Zustand der Materialprobe ausgegangen werden. Um die lückenlose Überwachung der Kühlkette jedes einzelnen Vials sicherzustellen, ist daher ein kostengünstiger Sensor wünschenswert, mit dem bereits eine einmalige und kurzzeitige Unterbrechung der Kühlkette zuverlässig detektiert werden kann.

Ein solcher Sensor ist bislang im Stand der Technik noch nicht bekannt, Ziel der Erfindung ist es daher, einen Sensor zu erzeugen, der diesen Nachteil überwindet. Die Erfindung löst diese Aufgabe mit einer Temperaturüberwachungseinheit der eingangs genannten Art mit den kennzeichnenden Merkmalen des Patentanspruchs 1.

Dies wird mit einer Temperaturüberwachungseinheit der eingangs genannten Art mit den kennzeichnenden Merkmalen des unabhängigen Patentanspruchs 1. Weitere vorteilhafte Ausgestaltungen der Temperaturüberwachungseinheit werden in den Merkmalen der abhängigen Ansprüche 2-12 beschrieben.

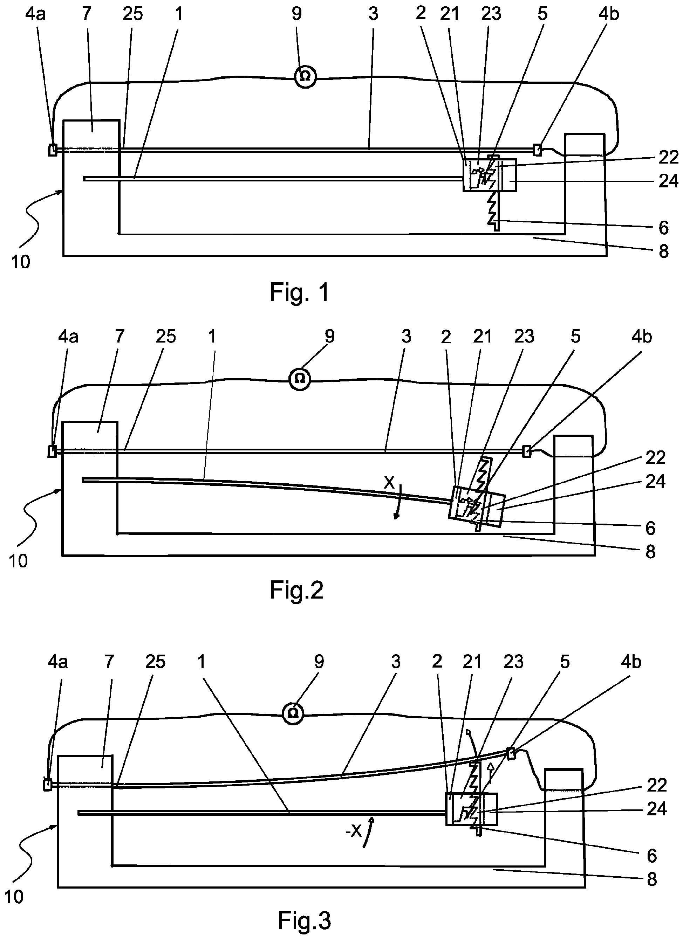

Um auch einzelne Vials überwachen zu können besteht die Möglichkeit die Temperaturüberwachungseinheit an der Wandung eines Vials zu befestigen, wie im unabhängigen Verwendungsanspruch 13 beansprucht. Eine bevorzugtes Ausführungsbeispiel der Erfindung wird im Folgenden anhand **Fig. 1** bis **Fig. 6** erläutert.

Es zeigen schematisch
**Fig. 1** eine Temperaturüberwachungseinheit in Ausgangslage,
**Fig. 2** eine Temperaturüberwachungseinheit während der Abkühlung,
**Fig. 3** eine Temperaturüberwachungseinheit bei Überschreiten einer Schwelltemperatur und daraus folgendem Bruch des Indikatorelements,
**Fig. 4** eine Frontansicht des Rastmechanismus einer Temperaturüberwachungseinheit in Ausgangslage,
**Fig. 5** einen Grundriss eines Rastmechanismus einer Temperaturüberwachungseinheit in Ausgangslage und
**Fig. 6** einen möglichen Verlauf der Temperatur und des elektrischen Leitwertes einer Temperaturüberwachungseinheit.

Bei der nachfolgenden Beschreibung der Erfindung anhand einer Ausführungsform bezeichnen Bezugszeichen gleiche bzw. vergleichbare Komponenten.

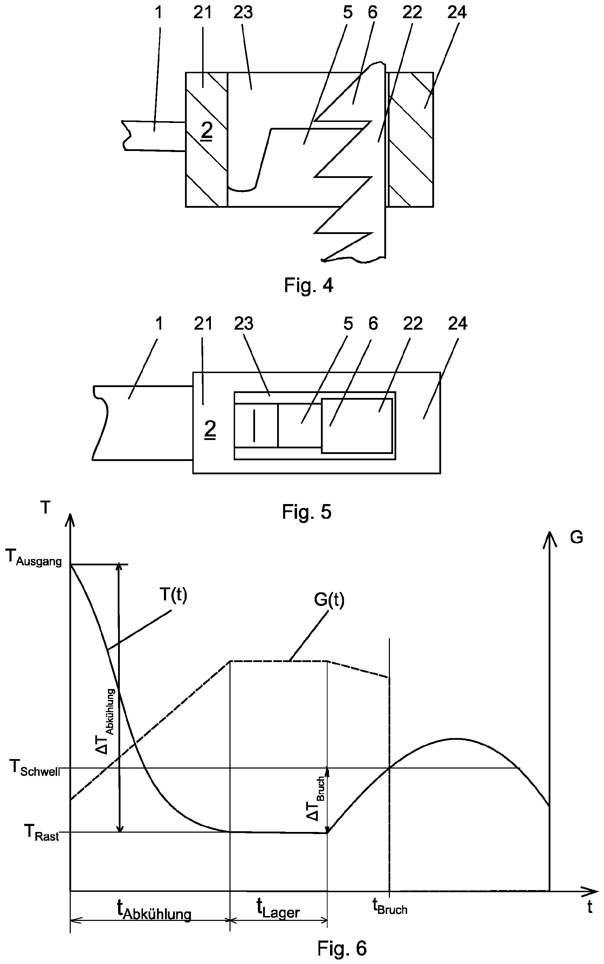

**Fig. 1** bis **Fig. 3** zeigen jeweils eine Frontansicht einer erfindungsgemäßen Temperaturüberwachungseinheit 10, mit einer nach oben offenen wannenförmigen Halterung 7 mit Boden 8, zur Überwachung von Vials. Vials sind kleine Kunststoffbehälter die der Aufbewahrung und dem Transport von biologischem Material dienen. Vials werden beispielsweise in flüssigem Stickstoff bei -195°C gelagert. Bevorzugt wird die Temperaturüberwachungseinheit 10 dabei mit den Vials gemeinsam gelagert. Die Temperaturüberwachungseinheit 10 hat die Aufgabe ein Wiedererwärmen über eine Schwelltemperatur T_{Schwell} (**Fig. 6**) zu detektieren.

An der Halterung 7 der Temperaturüberwachung 10 ist ein Abschnitt bzw. Endbereich des Bimetallstreifen 1, bestehend aus zwei Schichten unterschiedlicher Metalle, die miteinander stoffschlüssig oder formschlüssig verbunden sind, starr befestigt. Bei Abkühlung, aus der Ausgangstemperatur T_{Ausgang}, (**Fig. 6**) des Bimetallstreifens 1 kommt es aufgrund der unterschiedlichen Ausdehnungen und bedingt durch die unterschiedlichen Ausdehnungskoeffizienten der Metalle zu einer Verformung des Bimetallstreifens 1 (**Fig. 2**). Eine Abkühlung bewirkt bei der dargestellten Ausführungsform ein Abbiegen des Bimetallstreifens 1 in Richtung des Bodens 8 der Halterung 7. Die Richtung in die sich der Biegemetallstreifen 1 bei Abkühlung bewegt, wird in den weiteren Ausführungen als Abkühlbiegerichtung X (**Fig. 2**) des Bimetallstreifens 1 bezeichnet.

In **Fig. 1** ist dabei die Temperaturüberwachungseinheit 10 in ihrer Ausgangslage vor der Abkühlung dargestellt. Der Bimetallstreifen 1 ist gerade und ungekrümmt. Am Ende des Bimetallstreifens 1 ist ein erstes Rastelement 21, das in der vorliegenden Ausführungsform der Erfindung als Rasthülse 21 ausgebildet ist, mit dem Bimetallstreifen 1 verbunden. Die Rasthülse 21 besteht aus einem quaderförmigen Hohlkörper 24 mit einer durchgehenden Ausnehmung 23 und einem innenliegendem, kippbarem Rasthaken 5 (**Fig. 4, Fig. 5**). In der Ausnehmung 23 des Hohlkörpers 24 liegt ein zweites Rastelement 22, das eine teilversenkte, die Ausnehmung 23 durchsetzende Zahnstange 22, mit hintereinanderliegenden, sägezahnförmigen Zähnen 6 aufweist.

Die Halterung 7 ist von einem Graphitstab 3 durchsetzt. Der Graphitstab 3 ist in der Biegeebene des Bimetallstreifens 1 entgegen dessen Abkühlbiegerichtung X parallel zum Bimetallstreifen 1 angeordnet und starr an der Halterung 7 befestigt (**Fig. 1**). An den Enden des Graphitstabes 3 sind elektrische Kontakte 4a, 4b aufgesetzt, die dauerhaft bzw. bedarfsweiße zur Prüfung leitend mit einem Ohmmeter 9 verbunden sind oder verbunden werden können. Das Ohmmeter 9 ermittelt den Widerstand oder den Leitwert G zwischen den Kontakten 4a und 4b und stellt folglich fest ob die elektrische Leitung zwischen den Kontakten 4a und 4b intakt ist.

Wie in **Fig. 2** dargestellt, biegt sich der Bimetallstreifen 1 bei Abkühlung, während einer Abkühlungszeit t_{Abkühlung} (**Fig. 6**), in Abkühlbiegerichtung X. Dadurch senkt sich die am Bimetallstreifen 1 befestigte und an dessen Bewegung gekoppelte Rasthülse 21 in Richtung des Bodens 8 ab. Die Abstützung der Zahnstange 22 am Boden 8 der Halterung 7, in Abkühlbiegerichtung X, bewirkt bei Absenkung der Rasthülse 21, eine Relativbewegung der Rasthülse 21 gegenüber der Zahnstange 22. Da der Rasthaken 5 kippbar gelagert ist, wird das Verklemmen der Rasthülse 21 und der Zahnstange 22, bei der Bewegung der Rasthülse 21 in Abkühlbiegerichtung X relativ zur Zahnstange 22 verhindert. Während der Absenkung der Rasthülse 21 in Abkühlbiegerichtung X gleitet der Rasthaken 5 an den Flanken der sägezahnförmigen Zähne 6 der Zahnstange 22 entlang und wird dabei verkippt (**Fig. 2**). Die Flanken des Rasthakens 5 und der Zähne 6 sind, wie in **Fig. 4** gezeigt, bei dieser Ausführungsform gegengleich ausgeformt und aneinander angepasst. Diese konkrete Gestaltung des Rasthakens 5 und der Zähne 6 bewirkt bei einem Eintauchen des Rasthakens 5 in die Zahnlücken der Zahnstange 22, nach einer Abkühlung aus der Ausgangslage um eine Abkühlungstemperatur ΔT_{Abkühlung} (**Fig. 6**), ein Verrasten bei einer Rasttemperatur T_{Rast} und eine Blockierung der Relativbewegung der Rasthülse 21 gegenüber der Zahnstange 22, entgegen der Abkühlbiegerichtung X.

Nach Abkühlung werden die Vials bei gleichbleibender Temperatur gelagert. Dies zeigt **Fig. 6** mit der Lagerungszeit t_{Lager}.

Das Ohmmeter 9 detektiert während der Abkühlungszeit t_{Abkühlung} und der Lagerungszeit t_{Lager} (**Fig. 2****,** **Fig. 6**) die elektrische Verbindung zwischen den Kontakten 4a und 4b. Der Graphitstab 3 bleibt während des gesamten Vorgangs leitend. Das Ohmmeter 9 kann in einem alternativen Ausführungsbeispiel der Erfindung auch erst zur nachträglichen Prüfung, ob die Kühlkette intakt geblieben ist an die Kontakte 4a und 4b angeschlossen werden und braucht nicht während des gesamten Vorgangs bzw. Teilen des Abkühl- bzw. Erhitzungsvorgangs an die Temperaturüberwachungseinheit 10 angeschlossen sein.

**Fig. 3** zeigt den Fall einer Unterbrechung der Kühlkette, wobei nach erfolgter Abkühlungszeit t_{Abkühlung} der Temperaturüberwachungseinheit 10 unter die Rasttemperatur T_{Rast} (**Fig. 6**) eine nachfolgende Erwärmung um eine Bruchtemperatur ΔT_{Bruch}, stattfindet. Eine Erwärmung über eine Schwelltemperatur T_{Schwell} (**Fig. 6**) würde die Vials und das darin befindliche biologische Material schädigen und wird daher von der Temperaturüberwachungseinheit 10 detektiert. Bei Erwärmung der Temperaturüberwachungseinheit 10 und des darin befindlichen Bimetallstreifens 1 um die Bruchtemperatur ΔT_{Bruch} bewegt sich der Bimetallstreifen 1, wie in **Fig. 3** dargestellt, entgegen der Abkühlbiegerichtung X in Richtung der Ausgangslage. Durch das bei der Rasttemperatur T_{Rast} erfolgte Einrasten des Rasthakens 5 mit der Zahnstange 22 (**Fig. 4**) wird die Bewegungskopplung der Rasthülse 21 mit dem Bimetallstreifen 1 und die Zahnstange 22 durch die Rasthülse 21 entgegen der Abkühlbiegerichtung X verschoben. Durch die Mitnahme der Zahnstange 22 wird der Graphitstab 3 von dieser biegebeaufschlagt und entgegen der Abkühlbiegerichtung X verbogen. Bei Überschreiten einer Schwelltemperatur T_{Schwell} (**Fig. 6**) von z.B.: -100°C überschreitet die vorhandene von der Zahnstange 22 auf den Graphitstab 3 aufgebrachte Biegespannung in einem kritischen Querschnitt 25 des Graphitstabs 3 die maximale Bruchspannung. Dies führt zum Bauteilversagen bzw. zum Bruch des Graphitstabes 3.

Der Stab 3 weist im vorliegenden Ausführungsbeispiel einen positiven Temperaturkoeffizienten auf. Der Verlauf der Leitfähigkeit G über der Zeit t ist in **Fig. 6** dargestellt. Da der Werkstoff einen positiven Temperaturkoeffizienten aufweist, steigt die Leitfähigkeit G bei fallender Temperatur. Während der Abkühlungszeit t_{Abkühlung} bzw. bei sinkender Temperatur im Stab 3 steigt die elektrische Leitfähigkeit G, während der Lagerungszeit t_{Lager}, bleibt die elektrische Leitfähigkeit G dann konstant und fällt anschließend bei Erwärmung des Stabs 3 in Richtung der Ausgangtemperatur wieder ab. Im Falle eines Bruchs des Stabes 3 fällt die Leitfähigkeit auf 0.

Der Stab 3 kann alternativ aus einem Material mit negativem Temperaturkoeffizienten bestehen. Die Leitfähigkeit G fällt bei fallender Temperatur ab. Während der Abkühlungszeit t_{Abkühlung} bzw. bei sinkender Temperatur im Stab 3 fällt die elektrische Leitfähigkeit G, während der Lagerungszeit t_{Lager}, bleibt die elektrische Leitfähigkeit G dann konstant und steigt anschließend bei Erwärmung des Stabs 3 in Richtung der Ausgangtemperatur wieder an. Von dem in **Fig. 6** dargestellten Verlauf weist die Leitfähigkeit G des Stabs 3 dann einen analog gegenläufigen bzw. reziproken Verlauf der Leitfähigkeit G auf.

Das Ohmmeter 9 detektiert die Unterbrechung der elektrischen Verbindung zwischen den Kontakten 4a und 4b, die wie in **Fig. 3** dargestellt an den Enden des Graphitstabes 3 liegen. Bei erneuter Abkühlung der Vials und damit der Temperaturüberwachungseinheit 10 unter die Schwelltemperatur T_{Schwell} von z.B.: -100 °C stellt das Ohmmeter 9 weiterhin den Bruch des Graphitstabes 3 fest, selbst wenn die aktuelle Temperatur unterhalb der Schwelltemperatur T_{Schwell} liegt (**Fig. 6**). Folglich kann auch bei nachfolgendem erneutem Unterschreiten der Schwelltemperatur T_{Schwell} in einem nachfolgendem Zeitraum t₂ (**Fig. 6**) das einmalige Überschreiten und damit das Versagen der Kühlkette angezeigt werden.

Alternativ ist es möglich den Zustand des Graphitstabes 3 über einen in die Temperaturüberwachungseinheit 10 integrierten RFID/NFC-Transponder an ein externes Datenkommunikationsgerät zu übertragen. Dabei ist der RFID/NFC-Transponder mit den elektrischen Kontakten 4a und 4b verbunden. Ein in den RFID/NFC-Transponder integrierter elektrischer Schaltkreis detektiert ob die elektrische Verbindung zwischen den Kontakten 4a und 4b unterbrochen ist. Auf Anfrage eines externen Datenkommunikationsgerätes wird der Zustand vom RFID/NFC-Transponder über eine Antenne an das Datenkommunikationsgerät übermittelt.

Anstelle des Bimetallstreifens 1 kann jedes thermo-bimorphe Element verwendet werden, das derart angeordnet und ausgebildet ist, dass es seine Stellung mit sich ändernder Temperatur ändert und bei Abbiegung in Biegerichtung X verschwenkt bzw. gebogen wird.

Alternativ kann anstelle des Graphitstabes 3 jedes andere geeignete elektrisch leitfähige Element verwendet werden, dies ist beispielsweise eine Folie die bei der Rückstellung des zweiten Rastelements 22 durchstoßen und zerstört wird, sodass die elektrische Leitfähigkeit null wird.

Als zusätzliche Alternative zu der in den **Fig.1** bis **Fig. 6** gezeigten Detektion der Unterbrechung von Kühlketten durch die Unterbrechung eines elektrischen Stromkreises kann die Unterbrechung eines Lichtwellenleiters, beispielsweise einer Glasfaser, erfolgen. Dabei wird das Indikatorelement 3 durch eine Glasfaserleitung ausgebildet. Wird die Temperatur wieder in Richtung der Ausgangstemperatur geändert, bricht oder durchschneidet das zweite Rastelement 22 die Glasfaserleitung. Die Unterbrechung der Leitung kann detektiert werden, indem eine Lichtquelle Lichtwellen in die Glasfaserleitung einbringt und ihr ankommen am Ende der Leitung mittels Detektor überprüft wird.

Eine weitere Variante der Erfindung sieht vor, die Detektion der Unterbrechung von Kühlketten durch visuelle Veränderungen an der Temperaturüberwachungseinheit 10 zu erreichen. Eine visuelle Veränderung ist dabei z. B. eine durch ein Sichtfenster feststellbare Krümmung des Indikatorelementes 3 oder solange das Indikatorelement 3 intakt ist, ist ein Objekt durch das Sichtfenster erkennbar. Bei Bruch oder Beeinträchtigung des Indikatorelements 3 durch das Rastelement 22, wird dieses Objekt verschoben oder ausgeworfen und ist dadurch nicht mehr durch das Sichtfenster erkennbar. Wenn das Objekt nicht mehr sichtbar ist bedeutet das, dass die Kühl- oder Wärmekette unterbrochen wurde.

Ebenso möglich ist eine Detektion der Unterbrechung von Kühl- oder Wärmeketten durch farbliche Veränderung bestimmter Teile der Temperaturüberwachungseinheit 10. Das Indikatorelement 3 ist dabei als Behälter ausgebildet und beinhaltet eine Substanz, z.B. ein Gas. Bei Rückstellung des Temperaturbiegeelementes 1 in die Ausgangslage und der daran befestigten und eingerasteten Rastelemente 21 und 22, wird der Behälter durch das Rastelement 22 aufgebrochen und die Substanz tritt aus und verfärbt die Temperaturüberwachungseinheit 10 oder Teile der Temperaturüberwachung 10. Die Substanz kann insbesondere mit einer an dem Sichtfenster angebrachten zweiten Substanz reagieren, sodass sich das Sichtfenster verfärbt.

Alternativ zur Detektion der Unterbrechung von Kühlketten können auch Wärmeketten überwacht werden. Dabei wird das thermo-bimorphe Temperaturbiegeelement 1 derart angebracht, dass die in **Fig. 1** gezeigte Biegerichtung X mit der Biegerichtung des Temperaturelementes 1 bei Erwärmung zusammenfällt. Bei der in **Fig. 1** bis **Fig. 3** beschriebenen Ausführungsform wir dieser Effekt bereits erreicht wenn der Bimetallstreifen 1 um 180° um seine Längsachse gedreht montiert wird, die beiden Metallschichten des Bimetallstreifens 1 sind dabei gegenüber der zuvor gezeigten Ausführungsform vertauscht angeordnet.

Alternativ zu den beschriebenen Ausführungsformen kann das Temperaturelement 1 auch als Formgedächtnislegierung ausgebildet sein. Formgedächtnislegierungen sind spezielle Metalle, die in zwei unterschiedlichen Kristallstrukturen existieren können. Sie werden oft auch als Memorymetalle bezeichnet, da sie sich scheinbar an eine frühere Formgebung trotz nachfolgender starker Verformung scheinbar "erinnern" können und nach erfolgter Temperaturänderung, insbesondere Erwärmung oder Abkühlung, ihre ursprüngliche Form wirder einnehmen.

So könnte das voran beschriebene thermo-bimorphe Temperaturelement 1 durch eine Formgedächtnislegierung ersetzt werden. Bei Abkühlung unter die Rasttemperatur T_{Rast} und einer anschließenden Erwärmung über die Schwelltemperatur T_{Schwell} würde die Formgedächtnislegierung des Temperaturbiegelements 1 in eine vor der Abkühlung vorgegebene Konfiguration oder Lage zurückkehren. Das so verformte Temperaturelement 1 tritt äquivalent zu den beschriebenen Ausführungsformen der Fig.1 bis 6 mit dem Indikatorelement 3 in Wirkkontakt, sodass ein einmaliges Überschreiten der Schwelltemperatur T_{Schwell} detektiert und angezeigt werden kann. So kann das Temperaturbiegeelement 1, wenn es in seine vorab vorgegebene oder vordefinierte Form zurückkehrt, den Graphitstab 3 durchbrechen oder verformen oder einen oben beschriebenen Behälter öffnen oder aufbrechen und so die in diesem enthaltene Substanz freisetzen.

Es besteht weiters die Möglichkeit, das Rastelement und das thermo-bimorphe Temperaturbiegeelement 1 gänzlich durch ein Temperaturbiegelement mit Formgedächtnislegierung zu ersetzen oder durch die Formänderung ein Einrasten der Rastelemente 21 und 22 zu bewirken. Auch könnte das Indikatorelement 3 selbst als Formgedächtnislegierung ausgebildet sein und eine unzulässige Erwärmung durch eine Formänderung detektieren.

## Patentansprüche

1. Temperaturüberwachungseinheit umfassend ein Temperaturbiegeelement (1), das sich bei Temperaturänderung aus einer Ausgangslage und einer Ausgangstemperatur in einer Biegeebene nach einer vorgegebenen Biegerichtung (X) abbiegt, wobei, das Temperaturbiegeelement (1) an einem seiner Enden ein erstes Rastelement (21) eines Rastmechanismus (2) aufweist, die Temperaturüberwachungseinheit ein in einem Ausgangszustand befindliches Indikatorelement (3) aufweist, das in einen weiteren Zustand bringbar ist, das Temperaturbiegeelement (1), der Rastmechanismus (2), das Rastelement (21) sowie das Indikatorelement (3) der Temperaturüberwachungseinheit derart zueinander angeordnet sind, dass sich das erste Rastelement (21) des Rastmechanismus (2) bei Temperaturänderung in Biegerichtung (X) relativ zu einem zweiten Rastelement (22) des Ratsmechanismus (2), so weit verschiebt, dass das erste Rastelement (21) und das zweite Rastelement (22) miteinander eine Blockierung der Relativbewegung des ersten Rastelementes (21) gegenüber dem zweiten Rastelement (22) entgegen der Biegerichtung (X) bewirken, und dass bei anschließender Änderung der Temperatur in Richtung der Ausgangstemperatur und der daraus erfolgenden Rückstellung des Temperaturbiegeelementes (1), sowie des mit diesem verbundenen Rastmechanismus (2), das zweite Rastelement (22) das Indikatorelement (3), vorzugsweise irreversibel, aus dem Ausgangzustand in den zweiten Zustand überführt wird, **dadurch gekennzeichnet,**
a) **dass** das Indikatorelement (3) als Glasfaserstab ausgebildet ist und das zweite Rastelement (22) an seiner dem Glasfaserstab zugewandten Seite ein Element zum Durchbrechen oder Durchschneiden des Indikatorelements (3) aufweist, wobei das zweite Rastelement (22), bei Rückstellung des Temperaturbiegeelementes (1) den Stab (3) bricht und dadurch die Glasfaserleitung bricht, oder
b) **dass** das Indikatorelement (3) ein elektrisch leitfähiger Stab ist, wobei das Indikatorelement (3) insbesondere aus Graphit besteht und an seinen Enden mit jeweils einem elektrischen Kontakt (4a, 4b) elektrisch leitend verbunden ist und dass das zweite Rastelement (22), bei Rückstellung des Temperaturbiegeelementes (1), den Stab (3) biegebeaufschlagt und dadurch die elektrische Verbindung zwischen den beiden Kontakten (4a) und (4b) unterbricht und insbesondere den Stab (3) bricht, oder
c) **dass** ein Sichtfenster vorgesehen ist, durch das das Indikatorelement (3) sichtbar ist, wobei das Indikatorelement (3) als ein Fluid enthaltender Behälter ausgebildet ist, und dass das zweite Rastelement (22), bei Rückstellung des Temperaturbiegeelementes (1) den Behälter öffnet, so dass die Substanz entweicht und im Sichtfenster sichtbar ist, wobei die Substanz insbesondere mit einer an einem Sichtfenster aufgetragenen Substanz eine farbliche Reaktion erzeugt.

2. Temperaturüberwachungseinheit nach Anspruch 1, **dadurch gekennzeichnet, dass** das Temperaturbiegelement (1) als, insbesondere längliches, thermo-bimorphes Temperaturbiegeelement (1) oder Formgedächtnislegierung ausgebildet ist.

3. Temperaturüberwachungseinheit nach Anspruch 1, Alternative b), oder 2, **dadurch gekennzeichnet, dass** das Indikatorelement (3) über die Kontakte (4a, 4b) leitend mit elektrischen Bauteilen und/oder Messgeräten, insbesondere einem Leitfähigkeitsmessgerät (9), verbunden ist.

4. Temperaturüberwachungseinheit nach einem der vorangehenden Ansprüche, **dadurch gekennzeichnet, dass** sich das erste Rastelement (21) des Rastmechanismus (2) bei Abkühlung in Abkühlungsbiegerichtung (X) des Temperaturbiegelements (1) relativ zu einem zweiten Rastelement (22) des Rastmechanismus (2), so weit verschiebt, dass das erste Rastelement (21) und das zweite Rastelement (22) miteinander eine Blockierung der Relativbewegung des ersten Rastelementes (21) gegenüber dem zweiten Rastelement (22) entgegen der Abkühlbiegerichtung (X) bewirken und dass bei anschließender Erwärmung und der daraus erfolgenden Rückstellung des Temperaturbiegeelementes (1), sowie des mit diesem verbundenen Rastmechanismus (2), das zweite Rastelement (22) das Indikatorelement (3) aus dem Ausgangzustand in den zweiten Zustand überführt, wobei insbesondere das zweite Rastelement (22) das Indikatorelement (3) biegebeansprucht und das Indikatorelement (3) vorzugsweise bricht.

5. Temperaturüberwachungseinheit nach Anspruch 1, Alternative b), oder 2-3, **gekennzeichnet durch** einen RFID/NFC-Transponder, der mit den Kontakten (4a, 4b) elektrisch leitend verbunden ist und auf Anfrage das Vorliegen der Unterbrechung der elektrisch leitenden Verbindung zwischen den Kontakten (4a, 4b) prüft und ein diesbezügliches elektromagnetisches Signal abgibt.

6. Temperaturüberwachungseinheit nach einem der vorangehenden Ansprüche, **dadurch gekennzeichnet, dass** das Temperaturbiegeelement (1) an seinem dem ersten Rastelement (21) fernem Ende mit dem Indikatorelement (3) verbunden ist, wobei das Indikatorelement (3) in der Biegeebene des Temperaturbiegeelementes (1) und gegenüber dem Temperaturbiegeelement (1) entgegen der Biegerichtung (X) versetzt angeordnet ist.

7. Temperaturüberwachungseinheit nach einem der vorangehenden Ansprüche, **dadurch gekennzeichnet, dass** das dem Rastelement (21) ferne Ende des Temperaturbiegeelements (1) und das Indikatorelement (3) an einer Halterung (7) oder aneinander mit einer Halterung (7) starr befestigt sind.

8. Temperaturüberwachungseinheit nach einem der vorangehenden Ansprüche, **dadurch gekennzeichnet. dass** das erste Rastelement (21) als Rasthülse mit innenliegendem in gegen Biegerichtung (X) verkippbarem Rasthaken (5) ausgebildet ist, wobei das erste Rastelement (21) eine Ausnehmung (23) besitzt, durch die das zweite Rastelement (22) hindurchragt, wobei das zweite Rastelement (22) zumindest einen Zahn (6), insbesondere mehrere hintereinander angeordnete Zähne (6), aufweist und vorzugsweise als Zahnstange ausgebildet ist.

9. Temperaturüberwachungseinheit nach einem der vorangehenden Ansprüche, **dadurch gekennzeichnet, dass** das Temperaturbiegeelernent (1) als Bimetall, nämlich als Metallelement mit zwei Schichten aus jeweils unterschiedlichen Metallen ausgebildet ist, die miteinander stoffschlüssig oder formschlüssig verbunden sind.

10. Temperaturüberwachungseinheit nach einem der vorangehenden Ansprüche, **dadurch gekennzeichnet, dass** die Anordnung der Rastelemente (21, 22) die Relativbewegung des ersten Rastelementes (21) gegenüber dem zweiten Rastelement (22) entgegen der Abkühlbiegerichtung (X) bei einer Abkühlung des Temperaturbiegeelementes (1) in einem Temperaturbereich von -200 °C bis -50 °C blockiert.

11. Temperaturüberwachungseinheit nach einem der vorangehenden Ansprüche, **dadurch gekennzeichnet. dass** sich nach zuvoriger Abkühlung bei Überschreiten einer Schwelltemperatur, insbesondere kleiner oder gleich -100°C, der daraus folgenden Rückbildung der Verbiegung des Temperaturbiegeelementes (1) und des damit verbundenen Rastmechanismus (2), das zweite Rastelement (22) das Indikatorelement (3) aus dem Ausgangzustand irreversibel in den zweiten Zustand überführt.

12. Verwendung einer Temperaturüberwachungseinheit (10) nach einem der vorangehenden Ansprüche, wobei die Temperaturüberwachungseinheit (10) insbesondere an der Wandung des Vials befestigt wird.

## Claims

1. A temperature monitoring device comprising a temperature flexure element (1), which can be flexed from an initial position and an initial temperature in a flexing plane in a predetermined flexing direction (X) in the case of a change in temperature, wherein the temperature flexure element (1) has a first latching element (21) of a latching mechanism (2) on one of the ends thereof, the temperature monitoring device has an indicator element (3) in an initial state, which can be brought into a further state, the temperature flexure element (1), the latching mechanism (2), the latching element (21) and the indicator element (3) of the temperature monitoring device are arranged relative to one another in such a manner that the first latching element (21) of the latching mechanism (2) in the case of a change in temperature is displaced in the flexing direction (X) relative to a second latching element (22) of the latching mechanism (2) so far that the first latching element (21) and the second latching element (22) with each other cause a blocking of the
relative movement of the first latching element (21) with respect to the second latching element (22) counter to the flexing direction (X), and that in the case of a subsequent change in the temperature towards the initial temperature and the therefrom ensuing resetting of the temperature flexure element (1) and of the latching mechanism (2) connected thereto, the second latching element (22) is transferred by the indicator element (3), preferably irreversibly, from the initial state into the second state, **characterised in that**
a) the indicator element (3) is configured as a glass fibre rod and the second latching element (22) on the side thereof facing the glass fibre rod has an element for breaking through or cutting through the indicator element (3), wherein the second latching element (22) breaks the rod (3) and thus the glass fibre line when the temperature flexure element (1) is reset,
b) that the indicator element (3) is an electrically conductive rod, wherein the indicator element (3) consists in particular of graphite and on the ends thereof is connected in each case to an electrical contact (4a, 4b) in an electrically conductive manner and that the second latching element (22), when the temperature flexure element (1) is reset, applies flexure to the rod (3) and thus interrupts the electrical connection between the two contacts (4a) and (4b), and breaks the rod (3) in particular, or
c) that a viewing window is provided, through which the indicator element (3) is visible, wherein the indicator element (3) is configured as a container containing a fluid, and that the second latching element (22), when the temperature flexure element (1) is reset, opens the container so that the substance escapes and is visible in the viewing window, wherein the substance produces a coloured reaction in particular with a substance applied to a viewing window.

2. A temperature monitoring device according to claim 1, **characterised in that** the temperature flexure element (1) is configured as an especially elongated thermo-bimorph temperature flexure element (1) or shape-memory alloy.

3. A temperature monitoring device according to claim 1, alternative b), or 2, **characterised in that** the indicator element (3) is connected via the contacts (4a, 4b) to electrical components and/or measuring devices, in particular a conductivity measuring device (9), in an electrically conductive manner.

4. A temperature monitoring device according to any one of the preceding claims, **characterised in that** the first latching element (21) of the latching mechanism (2) during cooling in the cooling flexing direction (X) of the temperature flexure element (1) is displaced relative to a second latching element (22) of the latching mechanism (2) so that the first latching element (21) and the second latching element (22) with one another cause a blocking of the relative movement of the first latching element (21) with respect to the second latching element (22) counter to the flexing direction (X), and that in the case of a subsequent heating and the therefrom ensuing resetting of the temperature flexure element (1) and of the latching mechanism (2) connected thereto, the second latching element (22) and the indicator element (3) are transferred from the initial state into the second state, wherein in particular the second latching element (22) preferably applies flexure to the indicator element (3) and preferably breaks the indicator element (3).

5. A temperature monitoring device according to claim 1, alternative b), or 2-3, **characterised by** an RFID/NFC transponder, which is connected to the contacts (4A, 4b) in an electrically conductive manner and, on request, checks whether there is an interruption in the electrically conductive connection between the contacts (4A, 4b) and outputs a relevant electromagnetic signal.

6. A temperature monitoring device according to any one of the preceding claims, **characterised in that** the temperature flexure element (1) on the far end thereof in relation to the first latching element (21) is connected to the indicator element (3), wherein the indicator element (3) is arranged in the flexing plane of the temperature flexure element (1) and offset with respect to the temperature flexure element (1) counter to the flexing direction (X).

7. A temperature monitoring device according to any one of the preceding claims, **characterised in that** the far end, in relation to the latching element (21), of the temperature flexure element (1) and the indicator element (3) are fastened rigidly to a holder (7) or to each other by means of a holder (7).

8. A temperature monitoring device according to any one of the preceding claims, **characterised in that** the first latching element (21) is formed as a latching sleeve comprising an inner latching hook (5) which can be tilted counter to the flexing direction (X), wherein the first latching element (21) has a recess (23) through which the second latching element (22) projects, wherein the second latching element (22) has at least one tooth (6), in particular a plurality of teeth (6) arranged one behind the other, and is preferably designed as a toothed rack.

9. A temperature monitoring device according to any one of the preceding claims, **characterised in that** the temperature flexure element (1) is designed as a bimetal, namely as a metal element comprising two layers made of different metals in each case, which are connected to one another in a materially bonded or form-fitting manner.

10. A temperature monitoring device according to any one of the preceding claims, **characterised in that** the arrangement of the latching elements (21, 22) blocks the relative movement of the first latching element (21) relative to the second latching element (22) counter to the cooling flexing direction (X) during a cooling of the temperature flexure element (1) in a temperature range from -200 °C to -50 °C.

11. A temperature monitoring device according to any one of the preceding claims, **characterised in that** after prior cooling when a threshold temperature, in particular less than or equal to -100 °C, of the subsequent regression of the bending of the temperature flexure element (1) and of the latching mechanism (2) connected thereto is exceeded, the second latching element (22) transfers the indicator element (3) irreversibly from the initial state into the second state.

12. Use of a temperature monitoring device (10) according to any one of the preceding claims, wherein the temperature monitoring device (10) is fastened in particular to the wall of the vial.

## Revendications

1. Unité de surveillance de la température, comprenant un élément (1) de fléchissement en fonction de la température, qui en présence d'une variation de la température subit un fléchissement à partir d'une position de départ et d'une température de départ, dans un plan de fléchissement dans une direction de fléchissement prédéfinie (X), l'élément (1) de fléchissement en fonction de la température présentant en une de ses extrémités un premier élément d'encliquetage (21) d'un mécanisme d'encliquetage (2), l'unité de surveillance de la température présentant un élément indicateur (3) se trouvant dans un état initial, élément qui peut être mis dans un état supplémentaire, l'élément (1) de fléchissement en fonction de la température, le mécanisme d'encliquetage (2), l'élément d'encliquetage (21), ainsi que l'élément indicateur (3) de l'unité de surveillance de la température étant disposés les uns par rapport aux autres de telle sorte que le premier élément d'encliquetage (21) du mécanisme d'encliquetage (2) dévie, en présence d'une variation de la température, dans la direction de fléchissement (X) par rapport à un deuxième élément d'encliquetage (22) du mécanisme d'encliquetage (2), au point que le premier élément d'encliquetage (21) et le deuxième élément d'encliquetage (22) provoquent ensemble un blocage du mouvement relatif du premier élément d'encliquetage (21) par rapport au deuxième élément d'encliquetage (22) dans la direction opposée à la direction de fléchissement (X) et que, en présence d'une variation, ayant lieu ensuite, de la température dans la direction de la température de départ et du rappel, qui en résulte, de l'élément (1) de fléchissement en fonction de la température, ainsi que du mécanisme d'encliquetage (2) qui est relié à ce dernier, le deuxième élément d'encliquetage (22) de l'élément indicateur (3) passe, de préférence d'une manière irréversible, de l'état initial au deuxième état, **caractérisée en ce que**
a) l'élément indicateur (3) est conçu comme une tige en fibre de verre et le deuxième élément d'encliquetage (22) présente sur son côté dirigé vers la tige en fibre de verre un élément destiné à casser ou couper l'élément indicateur (3), le deuxième élément d'encliquetage (22) cassant la tige (3) lors du rappel de l'élément (1) de fléchissement en fonction de la température et de ce fait cassant la ligne en fibre de verre ou
b) l'élément indicateur (3) est une tige conductrice de l'électricité, l'élément indicateur (3) étant constitué en particulier de graphite et
étant, en chacune de ses extrémités, relié d'une manière conductrice de l'électricité à un contact électrique (4a, 4b) et **en ce que** le deuxième élément d'encliquetage (22), lors du rappel de l'élément (1) de fléchissement en fonction de la température, soumet à une sollicitation de flexion la tige (3) et de ce fait interrompt la liaison électrique entre les deux contacts (4a) et (4b) et en particulier casse la tige (3) ou
c) une vitre est prévue, à travers laquelle l'élément indicateur (3) est visible, l'élément indicateur (3) étant conçu comme un récipient contenant un fluide et **en ce que** le deuxième élément d'encliquetage (22), lors du rappel de l'élément (1) de fléchissement en fonction de la température, ouvre le récipient, de sorte que la substance s'échappe et soit visible dans la vitre, la substance produisant, en particulier avec une substance appliquée sur une vitre, une réaction colorée.

2. Unité de surveillance de la température selon la revendication 1, **caractérisée en ce que**
l'élément (1) de fléchissement en fonction de la température est conçu comme un élément (1) de fléchissement en fonction de la température, thermo-bimorphe, en particulier oblong, ou comme un alliage à mémoire de forme.

3. Unité de surveillance de la température selon la revendication 1 alternative b) ou 2, **caractérisée en ce que**
l'élément indicateur (3) est, par l'intermédiaire des contacts (4a, 4b), relié d'une manière conductrice à des composants électriques et/ou des appareils de mesure, en particulier à un appareil (9) de mesure de la conductivité.

4. Unité de surveillance de la température selon l'une des revendications précédentes, **caractérisée en ce que** le premier élément d'encliquetage (21) du mécanisme d'encliquetage (2) subit, en présence d'un refroidissement, dans la direction (X) de fléchissement en présence d'un refroidissement de l'élément (1) de fléchissement en fonction de la température, par rapport à un deuxième élément d'encliquetage (22) du mécanisme d'encliquetage (2), une déviation telle que le premier élément d'encliquetage (21) et le deuxième élément d'encliquetage (22) provoquent ensemble un blocage du mouvement relatif du premier élément d'encliquetage (21) par rapport au deuxième élément d'encliquetage (22) dans la direction opposée à la direction (X) de fléchissement en présence d'un refroidissement et **en ce que**, en présence d'un chauffage ayant lieu ensuite et du rappel qui en résulte de l'élément (1) de fléchissement en fonction de la température, ainsi que du mécanisme d'encliquetage (2) relié à ce dernier, le deuxième élément d'encliquetage (22) fait passer l'élément indicateur (3) de l'état initial au deuxième état, moyennant quoi en particulier le deuxième élément d'encliquetage (22) soumet l'élément indicateur (3) à une sollicitation de fléchissement et l'élément indicateur (3) va de préférence casser.

5. Unité de surveillance de la température selon la revendication 1 alternative b) ou 2-3, **caractérisée par** un transpondeur RFID/NFC, qui est relié d'une manière conductrice de l'électricité aux contacts (4a, 4b) et qui, sur demande, contrôle la présence de l'interruption de la liaison conductrice de l'électricité entre les contacts (4a, 4b) et émet un signal électromagnétique s'y rapportant.

6. Unité de surveillance de la température selon l'une des revendications précédentes, **caractérisée en ce que** l'élément (1) de fléchissement en fonction de la température est, en son extrémité éloignée du premier élément d'encliquetage (21), relié à l'élément indicateur (3), l'élément indicateur (3) étant disposé dans le plan de fléchissement de l'élément (1) de fléchissement en fonction de la température et étant décalé, par rapport à l'élément (1) de fléchissement en fonction de la température, dans la direction opposée à la direction (X) de fléchissement.

7. Unité de surveillance de la température selon l'une des revendications précédentes, **caractérisée en ce que** l'extrémité, éloignée de l'élément d'encliquetage (21), de l'élément (1) de fléchissement en fonction de la température et l'élément indicateur (3) sont fixés d'une manière rigide à un support (7) ou l'un à l'autre à l'aide d'un support (7).

8. Unité de surveillance de la température selon l'une des revendications précédentes, **caractérisée en ce que** le premier élément d'encliquetage (21) est conçu comme une douille d'encliquetage, comportant des crochets d'encliquetage (5) intérieurs, pouvant basculer dans la direction opposée à la direction (X) de fléchissement, le premier élément d'encliquetage (21) possédant un évidement (23), à travers lequel fait saillie le deuxième élément d'encliquetage (22), le deuxième élément d'encliquetage (22) présentant au moins une dent (6), en particulier plusieurs dents (6) disposées les unes derrière les autres et étant de préférence conçu comme une crémaillère.

9. Unité de surveillance de la température selon l'une des revendications précédentes, **caractérisée en ce que** l'élément (1) de fléchissement en fonction de la température est conçu comme un bimétal, plus précisément comme un élément métallique comportant deux couches, chacune en des métaux différents, qui sont reliées l'une à l'autre d'une manière ferme ou avec correspondance de forme.

10. Unité de surveillance de la température selon l'une des revendications précédentes, **caractérisée en ce que** la disposition des éléments d'encliquetage (21, 22) bloque le mouvement relatif du premier élément d'encliquetage (21) par rapport au deuxième élément d'encliquetage (22) dans la direction opposée à la direction (X) de fléchissement en présence d'un refroidissement, pour un refroidissement de l'élément (1) de fléchissement en fonction de la température dans une plage de températures de -200 °C à -50 °C.

11. Unité de surveillance de la température selon l'une des revendications précédentes, **caractérisée en ce que**, après un refroidissement préalable, quand la température dépasse une température seuil, en particulier inférieure ou égale à -100 °C, le rétablissement, qui a lieu ensuite, du fléchissement de l'élément (1) de fléchissement en fonction de la température et du mécanisme d'encliquetage (2) relié à ce dernier, le deuxième élément d'encliquetage (22) fait passer d'une manière irréversible l'élément indicateur (3) de l'état initial au deuxième état.

12. Utilisation d'une unité (10) de surveillance de la température selon l'une des revendications précédentes, l'unité (10) de surveillance de la température étant en particulier fixée à la paroi de la fiole.
